# EUROPÄISCHE PATENTSCHRIFT

(11) **EP 1 369 977 B1**
(45) Veröffentlichungstag und Bekanntmachung des Hinweises auf die Patenterteilung: **23.07.2008**
(21) Anmeldenummer: 03010726.2
(22) Anmeldetag: 14.05.2003
(51) Int. Cl.: H02K 5/124, H02K 5/16

(54) **Elektromotor für eine Flüssigkeitspumpe**
Electric motor for liquid pump driving
Moteur électrique pour entraînement d'une pompe de liquide

(30) Priorität: 07.06.2002 DE 10225258
(43) Veröffentlichungstag der Anmeldung: 10.12.2003
(73) Patentinhaber: Appliances Components Companies S.p.A., 33170 Pordenone (IT)
(72) Erfinder: Kühn, Ulrich, 26135 Oldenburg (DE)
(74) Vertreter: Jabbusch, Matthias

(56) Entgegenhaltungen:
- EP-A- 0 579 303
- EP-A- 0 827 257
- EP-A- 1 148 248
- US-A- 4 535 262
- US-A- 4 689 511
- PATENT ABSTRACTS OF JAPAN Bd. 009, Nr. 332 (E-370), 26. Dezember 1985 (1985-12-26) & JP 60 162430 A (TOSHIBA KK), 24. August 1985 (1985-08-24)

## Beschreibung

Die Erfindung betrifft einen Elektromotor für eine Flüssigkeitspumpe insbesondere für den Einsatz in einem haushaltstechnischen Gerät, mit wenigstens einem Lagerschild, durch das eine Welle hindurchgeführt ist, wobei das Lagerschild in radialer Anordnung zur Welle Lüftungsöffnungen aufweist, wobei jeweils zwei einander benachbarte Lüftungsöffnungen durch einen Lagerschildvorsprung voneinander getrennt sind und die Welle in einem Abschnitt ihrer Längserstreckung vor dem Lagerschild zumindestens eine abschnittsweise Vergrößerung ihres Durchmessers aufweist.

Elektromotoren der eingangs genannten Gattung werden für das Fördern von Flüssigkeiten eingesetzt. Sie finden ihren Einsatz beispielsweise in Geschirrspülmaschinen, in denen Wasser zu Waschzwecken gefördert wird.

Elektromotor und Flüssigkeitspumpe bilden dabei häufig eine gemeinsame Baugruppe aus. Die Flüssigkeitspumpe ist beispielsweise als Flügelradpumpe, insbesondere Umwälzpumpe, ausgebildet, die mit einem Gehäuse unmittelbar auf das Lagerschild des Elektromotors aufgesetzt ist. Vorrichtungen dieser Art sind aus der US-A-4535262 und der EP-A-0579303 bekannt.

Die Abdichtung des Inneren des Pumpengehäuses gegenüber dem Elektromotor erfolgt im Bereich der aus dem Elektromotor in das Pumpengehäuse eingeführten Welle regelmäßig mit einer Gleitringdichtung. Bei dieser Gleitringdichtung wird die Dichtwirkung durch zwei aufeinander gepreßte, gegeneinander rotierende Flächen erreicht.

Die Bewegung der an der Dichtung beteiligten Flächen zueinander bedingt, daß die Dichtwirkung keine absolut flüssigkeitsdichte Ausbildung hat. Es tritt Leckwasser auf, das zwischen den aneinander liegenden Flächen der Dichtung hindurch tritt.

Durch die Dichtung hindurch tretendes Wasser kann im Bereich des Motors zu Beschädigungen führen. Das Wasser kann auch eine Verteilung über die Fläche des Lagerschildes erfahren, wodurch die Gefahr besteht, daß das Wasser durch die Lüftungsöffnungen des Lagerschildes in das Innere des Motors, beispielsweise in den Bereich der Motorwicklungen, gelangt. Dadurch können Kurzschlüsse verursacht werden, die zu einem frühzeitigen Ausfall des Elektromotors führen.

Der Erfindung liegt die Aufgabe zugrunde, einen Elektromotor der eingangs genannten Gattung und somit mit Lüftungsöffnungen im Lagerschild aufzuzeigen, der auch bei einem Einsatz in einer Flüssigkeitspumpe eine lange Standzeit ohne Gefahr des Auftretens von Kurzschlüssen aufgrund Leckwassers hat.

Diese Aufgabe ist erfindungsgemäß dadurch gelöst, daß koaxial zur Welle in der Ebene der abschnittsweisen Vergrößerung des Wellendurchmessers eine etwa auf einer Kreisbahn umlaufende Wandung angeordnet ist, welche sich jeweils zwischen einigen einander benachbarten Lagerschildvorsprüngen flüssigkeitsdicht erstreckt, wobei jede Rippe einen radial zur Welle ausgerichteten Wandungskörper aufweist, die Wandung als ein den Abstand zwischen mehreren einander benachbarten Rippen überbrückender Kragenring ausgebildet ist und der Kragenring in radialer Richtung von der Welle ausgehend vor den Lüftungsöffnungen zwischen den Rippen angeordnet ist.

Durch die Gleitringdichtung hindurch tretendes Wasser fließt auf der Motorwelle entlang in Richtung Lagerschild. Dieses Wasser fließt auf diesem Weg auf die abschnittweise Vergrößerung des Durchmessers der Welle, wodurch es nach außen abgelenkt wird. Dieses Ablenken führt bei einer Drehung der Welle im Betrieb des Elektromotors zu einem Lösen des Wassers von der Welle. Es wird aufgrund der Fliehkraft nach außen weggeschleudert.

Damit ist erreicht, daß Feuchtigkeit nicht entlang der Welle in das Innere des Elektromotors eintreten kann. Damit auch das von der Vergrößerung der Welle weggeschleuderte Wasser aufgefangen wird und insbesondere nicht über die Lüftungsöffnungen in den Bereich der Motorwicklungen eingesogen wird, ist die Wandung vorgesehen. Die Wandung ist koaxial zur Welle angeordnet, so daß sie die Welle umläuft. Die Wandung bildet dadurch einen Spritzschutz aus, gegen welchen Flüssigkeit von der Vergrößerung des Durchmessers der Welle geschleudert wird. Der Spritzschutz fängt diese Feuchtigkeit auf und verhindert damit ein Eintreten in das Innere des Elektromotors.

Bei dem erfindungsgemäßen Elektromotor ist durch einfache Maßnahmen ein wirksamer Schutz gegen das Eindringen von Feuchtigkeit aus dem Bereich der Flüssigkeitspumpe in das Innere des Elektromotors erreicht. Die Standzeit des Elektromotors wird dadurch signifikant erhöht.

Nach der Erfindung ist vorgesehen, daβß jeder Lagerschildvorsprung als Rippe ausgebildet ist, welche einen radial zur Welle ausgerichteten Wandungskörper aufweist. Die als Rippen ausgebildeten Vorsprünge dienen mit ihren Wandungskörpern zugleich als Kühlkörper des Elektromotors. Zwischen den Rippen kann zudem Luft hindurch treten, die zur direkten Kühlung des Motorinneren dient. Durch die erfindungsgemäße Anordnung von Schleuderscheibe und Wandung am Lagerschild kann somit ein derartiger Elektromotor mit guten Kühleigenschaften aufgrund der Lüftungsöffnungen für kompakte Flüssigkeitspumpen eingesetzt werden.

Die Wandung ist bei dieser Ausbildung der Lagerschildvorsprünge als den Abstand zwischen mehreren einander benachbarten Rippen überbrückender Kragenring ausgebildet. Der Kragenring ist derart angeordnet, daß er in radialer Richtung von der Welle ausgehend vor den Lüftungsöffnungen zwischen den Rippen angeordnet ist. Der Kragenring verbindet beispielsweise die der Welle zugeordneten Enden der Rippen miteinander. Dadurch ist sichergestellt, daß ausgehend von der Schleuderscheibe keine Flüssigkeit in den Raum zwischen zwei einander benachbarten Rippen und nachfolgend über die Lüftungsöffnung in das Innere des Elektromotors gelangen kann.

Die auf der Welle angeordnete abschnittsweise Vergrößerung ist beispielsweise als auf der Welle angeordnete Schleuderscheibe ausgebildet. Die Schleuderscheibe kann dabei ein zusätzliches, auf die Welle aufgeschobenes Bauteil sein, sie kann aber auch einstückig in die Welle eingeformt sein. Die Schleuderscheibe ist etwa diskusförmig ausgebildet, vorzugsweise stellt ihr äußerer Rand eine relativ scharfe Abrißkante für die Flüssigkeit zur Verfügung.

Nach einer nächsten Weiterbildung der Erfindung ist vorgesehen, daß die Zuordnung der Wandung zur Welle über etwa 270° auf dem Kreisbogen ausgebildet ist. Die Wandung ist nach dieser Weiterbildung der Welle nicht voll umfänglich zugeordnet, so daß die Wandung keinen geschlossenen Ring ausbildet. Der Ring ist nur teilweise ausgebildet, vorzugsweise etwa über 270°. Dadurch verbleibt in der Wandung eine Lücke. Die Lücke kann so angeordnet sein, beispielsweise in einem unteren Abschnitt eines Vollkreises, daß sie eine Ablauföffnung für an der Wandung aufgefangene Flüssigkeit ausbildet. Dadurch ist vermieden, daß es im Bereich der Wandungen zu Flüssigkeitsstauungen kommt. In den Abschnitten, in denen die Wandung die Lücke aufweist, sind in dem Lagerschild keine Lüftungsöffnungen angeordnet, so daß im Bereich des Flüssigkeitsablaufes der Eintritt von Feuchtigkeit in das Innere des Elektromotors verhindert ist. Anstelle eines Umlaufes über 270° können auch andere Ausgestaltungen der Wandung vorgesehen sein, indem die Wandung zum Beispiel mehrere Abschnitte aufweist, die durch mehr als eine Unterbrechung zu Flüssigkeitsablaufzwecken voneinander getrennt sind.

Die Wandung kann ein zusätzliches Bauteil sein, welches mit geeigneten Befestigungsmitteln am Lagerschild befestigt ist. Vorzugsweise ist jedoch vorgesehen, daß die Wandung mit dem Lagerschild einstückig gefertigt ist, so daß ihre Fertigung vereinfacht ist.

Ein Ausführungsbeispiel der Erfindung, aus dem sich weitere erfinderische Merkmale ergeben, ist in der Zeichnung dargestellt. Es zeigen:
- Fig. 1:: eine perspektivische Schnitteilansicht eines Elektromotors, auf den eine Flügelrad-Flüssigkeitspumpe aufgesetzt ist,
- Fig. 2:: eine perspektivische Ansicht des Lagerschilds dieses Elektromotors und
- Fig. 3:: eine Schnitteilansicht des Elektromotors und der Flüssigkeitspumpe gemäß Fig. 1.

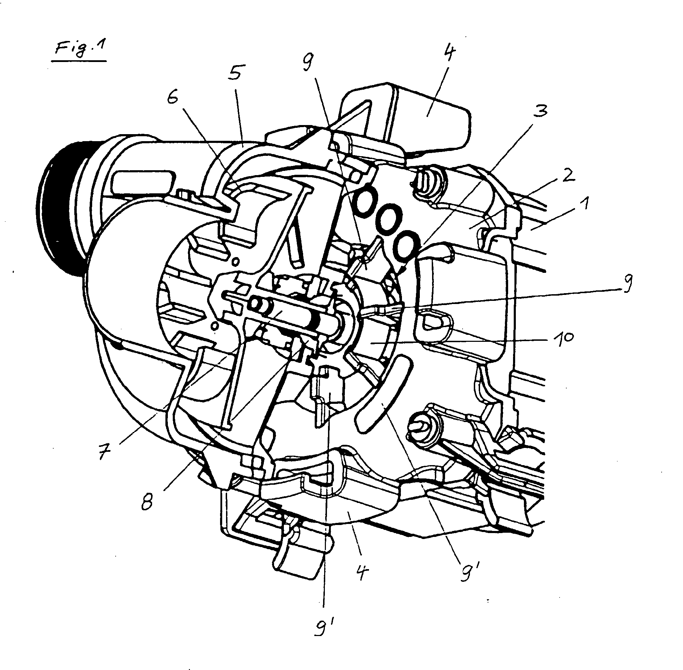

Der in Fig. 1 dargestellte Elektromotor weist ein Ständerpaket 1 auf, an das auf der dargestellten Seite ein Lagerschild 2 angesetzt ist. Das Lagerschild 2 weist Lüftungsöffnungen 3 auf, über welche Luft zu Kühlzwecken in das Innere des Ständerpaketes 1 eintritt.

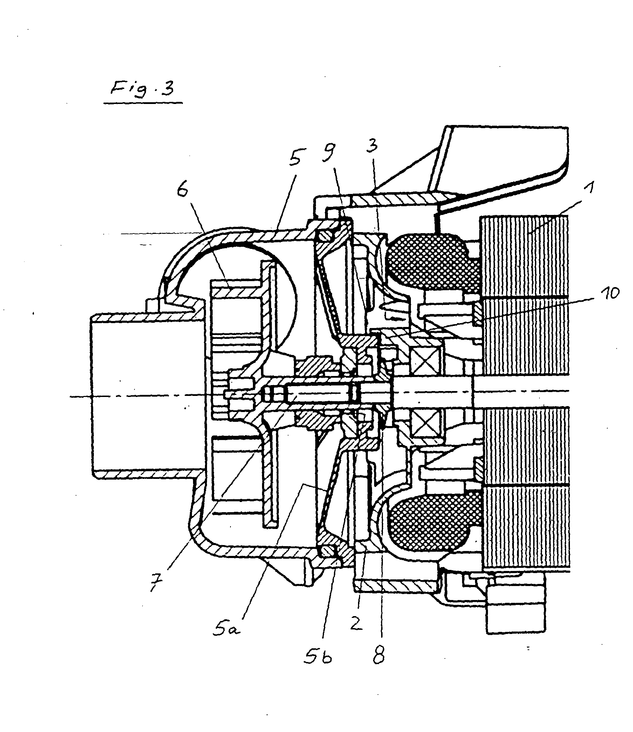

Auf dem Lagerschild 2 ist mit geeigneten rastenden Befestigungsmitteln 4 ein Pumpengehäuse 5 angeordnet. Im Pumpengehäuse 5 ist ein Flügelrad 6 angeordnet, das auf eine aus dem Ständerpaket 1 des Motors herausgeführte Welle 7 aufgebracht ist. Aus Fig. 3 geht hervor, daß das Pumpengehäuse 5 auf der dem Elektromotor zugekehrten Seite durch einen Pumpenboden 5a abgeschlossen ist. Durch diesen Pumpenboden 5a ist die Welle 7 durch eine Gleitringdichtung 5b hindurchgeführt.

Auf der Welle 7 ist in einem Bereich vor dem Lagerschild 2 eine Schleuderscheibe 8 angeordnet (Fig. 3). Die Schleuderscheibe 8 ist mit der Welle 7 drehfest verbunden.

Das Lagerschild 2 weist radial zur Welle 7 ausgerichtete Rippen 9 auf, welche einander benachbarte Lüftungsöffnungen 3 voneinander trennen. Die Rippen 9 sind mit dem Lagerschild 2 einstückig verbunden. Lagerschild 2 und Rippen 9 bilden beispielsweise ein gemeinsames Gußteil aus.

Den Rippen 9 ist ein Kragenring 10 zugeordnet, welcher eine die Welle 7 abschnittsweise auf einer Kreisbahn umlaufende Wandung ausbildet. Der Kragenring 10 ist in der Ebene der Schleuderscheibe 8 angeordnet, so daß von der Streuscheibe 8 nach außen geschleuderte Flüssigkeit gegen den Kragenring 10 geführt wird. Auch der Kragenring 10 ist mit dem Lagerschild 2 und darüber hinaus mit den Rippen 9 einstückig verbunden.

Im Bereich der unteren Rippen 9' weist der Kragenring 10 eine Lücke auf, so daß er nicht als Vollring ausgebildet ist. Im Bereich dieser Rippen 9' sind in dem Lagerschild 2 keine Lüftungsöffnungen 3 angeordnet.

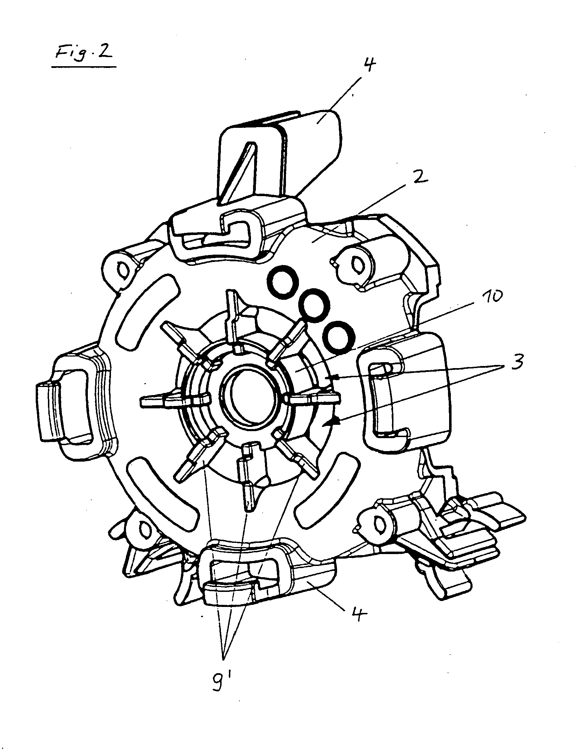

In Fig. 2 ist der Kragenring 10 deutlicher zu erkennen. Der Kragenring 10 ist über ein Bogenmaß von etwa 270° ausgebildet, zwei Zwischenräume zwischen den Rippen 9' bleiben frei. Zwischen diesen Rippen 9' kann durch den Kragenring 10 aufgefangene Flüssigkeit abfließen. Zwischen den Rippen 9' sind keine Lüftungsöffnungen 3 angeordnet, das Lagerschild 2 ist in diesem Bereich durch eine Wandung verschlossen.

Fig. 3 zeigt den kompakten Aufbau der aus Elektromotor und Pumpe gebildeten Baueinheit. Aufgrund der auf der Welle 7 angeordneten Schleuderscheibe 8 und dem Kragenring 10 ist das Eindringen von Flüssigkeit in das Innere des Elektromotors verhindert. Die Lüftungsöffnungen 3 werden durch den Kragenring 10 gegen die Schleuderscheibe 8 abgedeckt.

## Patentansprüche

1. Elektromotor für eine Flüssigkeitspumpe insbesondere für den Einsatz in einem haushaltstechnischen Gerät, mit wenigstens einem Lagerschild (2), durch das eine Welle (7) hindurchgeführt ist, wobei das Lagerschild (2) in radialer Anordnung zur Welle (7) Lüftungsöffnungen (3) aufweist und jeweils zwei einander benachbarte Lüftungsöffnungen (3) durch einen als Rippe (9,9') ausgebildeten Lagerschildvorsprung voneinander getrennt sind und die Welle (7) in einem Abschnitt ihrer Längserstreckung vor dem Lagerschild zumindestens eine abschnittsweise Vergrößerung (8) ihres Durchmessers aufweist,
**dadurch gekennzeichnet,**
**daß** koaxial zur Welle (7) in der Ebene der abschnittsweisen vergrößerung (8) des Wellendurchmessers eine etwa auf einer Kreisbahn umlaufende Wandung angeordnet ist, welche sich jeweils zwischen einigen einander benachbarten Lagerschildvorsprüngen flüssigkeitsdicht erstreckt, wobei jede Rippe (9,9') einen radial zur Welle (7) ausgerichteten Wandungskörper aufweist, die Wandung als ein den Abstand zwischen mehreren einander benachbarten Rippen (9,9') überbrückender Kragenring (10) ausgebildet ist und der Kragenring (10) in radialer Richtung von der Welle (7') ausgehend vor den Lüftungsöffnungen zwischen den Rippen (9,9') angeordnet ist.

2. Elektromotor nach Anspruch 1, **dadurch gekennzeichnet, daß** die abschnittsweise Vergrößerung des Wellendurchmessers als eine auf der Welle (7) angeordnete Schleuderscheibe (8) ausgebildet ist.

3. Elektromotor nach Anspruch 1 oder 2, **dadurch gekennzeichnet, daß** die Zuordnung der Wandung zur Welle (7) über etwa 270° ausgebildet ist.

4. Elektromotor nach einem der Ansprüche 1 bis 3, **dadurch gekennzeichnet, daß** die Wandung mit dem Lagerschild (2) einstückig gefertigt ist.

## Claims

1. An electric motor for a liquid pump, in particular for use in a domestic appliance, comprising at least one end shield (2) through which is guided a shaft (7), wherein the end shield (2) comprises ventilation openings (3) in a radial arrangement with respect to the shaft (7) and respectively two adjacent ventilation openings (3) are separated from one another by an end shield projection configured as a rib (9, 9') and the shaft (7) comprises at least one section-wise enlargement (8) of its diameter in a section of its longitudinal extension in front of the end shield,
**characterised in**
**that** a wall running approximately on a circular track is disposed coaxially to the shaft (7) in the plane of the section-wise enlargement (8) of the shaft diameter, which wall extends in a liquid-tight manner respectively between some adjacent end shield projections, wherein each rib (9, 9') comprises a wall member aligned radially to the shaft (7), the wall is configured as a collar ring (10) which bridges the spacing between a plurality of adjacent ribs (9, 9') and the collar ring (10) is disposed in front of the ventilation openings between the ribs (9, 9') going in the radial direction from the shaft (7').

2. The electric motor according to claim 1, **characterised in that** the section-wise enlargement of the shaft diameter is configured as a flinger (8) disposed on the shaft (7).

3. The electric motor according to claim 1 or 2, **characterised in that** the assignment of the wall to the shaft (7) is configured over about 270°.

4. The electric motor according to one of claims 1 to 3, **characterised in that** the wall is manufactured in one piece with the end shield (2).

## Revendications

1. Moteur électrique destiné à une pompe à liquide, notamment en vue d'une utilisation dans un appareil technique ménager, comportant au moins un flasque (2), à travers lequel un arbre (7) est inséré, moyennant quoi le flasque (2) présente dans une disposition radiale par rapport à l'arbre (7) des ouvertures d'aération (3) et deux ouvertures d'aération (3) voisines l'une de l'autre sont respectivement séparées par une protubérance de flasque configurée comme une nervure (9,9') et l'arbre (7) présente sur une section de son extension longitudinale, avant le flasque, au moins un agrandissement (8) de son diamètre sur des sections,
**caractérisé en ce que**
coaxialement à l'arbre (7) au niveau de l'agrandissement (8) sur des sections du diamètre de l'arbre, une paroi faisant le tour sur une trajectoire approximativement circulaire est disposée, laquelle s'étend respectivement de manière étanche au liquide entre quelques protubérances de flasque voisines les unes des autres, moyennant quoi chaque nervure (9,9') présente un corps de paroi orienté radialement par rapport à l'arbre (7), la paroi est configurée comme une bague de collerette (10) enjambant l'espace libre entre plusieurs nervures (9,9') voisines les unes des autres et la bague de collerette (10) est disposée entre les nervures (9,9') dans la direction radiale en partant de l'arbre (7') devant les ouvertures d'aération.

2. Moteur électrique selon la revendication 1, **caractérisé en ce que** l'agrandissement sur des sections du diamètre de l'arbre est configuré comme un disque centrifuge (8) disposé sur l'arbre (7).

3. Moteur électrique selon la revendication 1 ou 2, **caractérisé en ce que** la coordination de la paroi à l'arbre est réalisée sur environ 270°.

4. Moteur électrique selon une des revendications 1 à 3, **caractérisé en ce que** la paroi est fabriquée en un seul bloc avec le flasque (2).
